(19) Europäisches Patentamt

European Patent Office

Office européen des brevets

(11) **EP 1 142 852 B1**

(12) **EUROPÄISCHE PATENTSCHRIFT**

(45) Veröffentlichungstag und Bekanntmachung des Hinweises auf die Patenterteilung:
**15.12.2004 Patentblatt 2004/51**

(51) Int Cl.⁷: **C04B 41/87**, F02C 7/24, F01D 5/08, F01D 5/26, F23R 3/00

(21) Anmeldenummer: **01108713.7**

(22) Anmeldetag: **06.04.2001**

(54) **Verbundkeramikmaterial mit gradierter thermochemischer Schutzschicht**

Composite ceramic material having graded thermochemical protective coating

Matériau composite céramique comportant une couche protectrice thermochimique à gradient de composition

(84) Benannte Vertragsstaaten:
**AT BE CH CY DE DK ES FI FR GB GR IE IT LI LU MC NL PT SE TR**

(30) Priorität: **07.04.2000 DE 10017429**

(43) Veröffentlichungstag der Anmeldung:
**10.10.2001 Patentblatt 2001/41**

(73) Patentinhaber: **DLR Deutsches Zentrum für Luft- und Raumfahrt e.V.**
**53175 Bonn (DE)**

(72) Erfinder:
• **Schneider, Hartmut, Prof. Dr.**
  **53359 Rheinbach (DE)**
• **Göring, Jürgen, Dr.**
  **51145 Köln (DE)**
• **Spies, Thomas, Dr.**
  **49661 Cloppenburg (DE)**
• **Kanka, Bernd**
  **51465 Bergisch Gladbach (DE)**

(74) Vertreter: **Jönsson, Hans-Peter, Dr. et al**
**Patentanwälte,**
**von Kreisling Selting Werner,**
**Deichmannhaus am Dom**
**50667 Köln (DE)**

(56) Entgegenhaltungen:
**WO-A-99/55640**

• **DATABASE COMPENDEX [Online] ENGINEERING INFORMATION, INC., NEW YORK, NY, US; GOERING J ET AL: "Thermal barrier coated Nextel 720 fiber/mullite matrix composites: their potential for long-term high temperature use in gas turbines" Database accession no. E2000495369762 XP002197977 & 24TH ANNUAL CONFERENCE ON COMPOSITES, ADVANCED CERAMICS, MATERIALS, AND STRUCTURES:A;COCOA BEACH, FL, USA JAN 23-JAN 28 2000, Bd. 21, Nr. 3, 2000, Seiten 613-618, Ceram Eng Sci Proc;Ceramic Engineering and Science Proceedings 2000 American Ceramic Soc, Westerville, OH, USA**

**Beschreibung**

Gegenstand der Erfindung sind Verbundkeramikmaterialien mit gradierter thermochemischer Schutzschicht auf oxidischen Substraten, ein Verfahren zum Aufbringen einer thermischen Schutzschicht auf das Substrat sowie die Verwendung dieser Materialien.

Aufspritzschichten sind bekanntermaßen durch thermisches Spritzen aufgebrachte anorganische Oberflächenschichten. Die Spritzwerkstoffe werden in oder außerhalb von Spritzgeräten (Spritzpistolen, Spritzkanonen, Plasmajets, Plasmabrennern, Plasmageneratoren, Plasmatrons) geschmolzen oder angeschmolzen und mit hoher Geschwindigkeit auf die Oberfläche gespritzt. Die Oberflächenbereiche schmelzen hierbei im allgemeinen nicht. In Sonderfällen wird jedoch beim Spritzen oder danach ein erwünschtes Anschmelzen und/oder eine Schmelzverbindung erzielt.

Thermisch gespritzte Schichten werden häufig aufgebracht, um den Verschleiß und die Korrosion des Substrats herabzusetzen, daneben auch um die Wärmeübertragung oder elektrische Leitfähigkeit zu erhöhen oder zu erniedrigen, die Betriebsfähigkeit einer Vorrichtung wiederherzustellen oder ganz besondere Oberflächeneigenschaften, wie hohe oder niedrige Elektronen-, Emissions-, katalytische Effekte, Hochtemperaturstabilität und anderes zu erzielen. Während überwiegend Metalle als Überzugswerkstoffe verwendet werden, gewinnen in der jüngeren Zeit oxidische Werkstoffe mehr und mehr an Bedeutung.

In der DE 198 14 588 A1 wird eine mullitische thermische Schutzschicht auf einem langfaserverstärkten mullitischen verpressten Substrat verwendet. Dadurch kann die Anwendungstemperatur des Materials über die Temperaturstabilität des Substratmaterials, welche von den Fasermaterialien bestimmt wird, erhöht werden.

Schutzschichten gegen chemische Reaktionen auf mullitischen Substratmaterialien sind aus der Literatur nicht bekannt. Aus J. Göring et al., Ceram. Sci. Eng. Proc. 21-613 (2000), sind mullitische thermische schutzschichten auf Aluminiumsilikatfasern enthaltenden Verbundwerkstoffen mit Mullitmatrix bekannt.

Gradierte oxidische Schichten an sich sind im Stand der Technik bekannt bei metallischen und nichtoxidischen keramischen Schichten, siehe beispielsweise N.S. Jacobson et al., Durability of Silica-Protected Ceramics in Combustion Atmospheres, High-Temperature Ceramic-Matrix Composites I, 157-170, Bd. 57, 1995.

Unter hohen Temperaturen, Drücken, Gasgeschwindigkeiten und in Wasserdampf-Atmosphäre, die in realen Verbrennungskammern moderner Turbinen herrschen, erweist sich Mullit nicht als langzeitstabil, da $SiO_2$ in Form von SiO und $Si(OH)_4$ beziehungsweise $Si_xO_y(OH)_z$ aus der Keramik herausgelöst wird. Daraus ergibt sich die Aufgabe der vorliegenden Erfindung, die thermische Schutzschicht auch vor chemischer Degradierung zu schützen, in dem man andere Oberflächenoxide vorwendet, die keine $SiO_2$-Phasen beinhalten. Durch unterschiedliche thermische Ausdehnungskoeffizienten zwischen Oberflächenoxidschicht und Mullitschicht werden jedoch unter Thermowechseln Belastungen induziert, die zu einer Schädigung der bekannten dual-layer Schutzschichten führen.

Aufbauend auf diesen allgemeinen Erkenntnissen, besteht die Aufgabe der vorliegenden Erfindung darin, eine thermochemische Schutzschicht auf ein oxidisches Faserverbundsubstrat aufzubringen. Übliche oxidische Langfasern in Faserverbundmaterialien weisen eine unbefriedigende thermische Stabilität von etwa 1000 °C auf, wobei jedoch höhere Oberflächentemperaturen, wie etwa 1300 °C, beispielsweise für Keramikschindeln in der Brennkammer einer stationären oder mobilen Gasturbine erwünscht sind.

Die vorgenannte Aufgabe wird in einer ersten Ausführungsform gelöst durch Verbundkeramikmaterialien mit einem $SiO_2$-Phasen enthaltenden Substrat aus oxidischem Fasermaterial und oxidischer Matrix mit einer gradierten thermochemischen Schutzschicht, die an der dem Substrat abgewandten Oberfläche frei von Siliziumdioxid ist und an der dem Substrat zugewandten Fläche die gleiche chemische Zusammensetzung wie das Substrat aufweist **und aus Mullit besteht.**

Als Oberfläche der Schutzschicht werden oxidische keramische Materialien verwendet, in deren Struktur sich kein $SiO_2$ befindet (beispielsweise $Al_2O_3$, YSZ, CSZ, YAG, Monazite, Spinelle). Durch den gradierten Aufbau der Schutzschicht (Aufbringung durch Flammspritztechnik/Plasrnaspritztechnik) zunächst von reinem Mullit auf der Substratseite zur $SiO_2$ freien Oxidkomponente an der Oberfläche werden die Belastungen im beschichteten Material bei Thermowechseln wesentlich verringert und die chemische Kompatibilität erhöht.

Die Schutzschicht ermöglicht den thermischen und chemischen Schutz von mullitischen Keramiken unter hohen Drücken, Temperaturen und Strömungsgeschwindigkeiten.

Der gradierte Aufbau der Schutzschicht vermindert die inneren Spannungen bei Thermowechseln und verbessert damit die Haftung zwischen Substrat und Schutzschicht.

Mit Hilfe der vorliegenden Erfindung ist es möglich, das Werkstück während des Aufbringens der thermischen Schutzschicht so wenig wie möglich zu erwärmen, so dass keine Gefügeveränderung und kein Verzug auftritt. Die Anwendung der Erfindung ist nicht von der Größe des Werkstücks oder des Bauteils abhängig. Auch kompliziert geformte Bauteile lassen sich mit Hilfe der Erfindung beschichten.

Während üblicherweise als Nachteil des Flammspritzverfahrens angesehen wird, dass die Schichten normalerweise nicht dicht sind, besteht hierin ein besonderer Vorteil der vorliegenden Erfindung, da aufgrund der Rest-Porosität der aufgespritzten Schicht eine hervorragende Wärmedämmwirkung erzielt wird. Aufgrund der hervorragenden Wärmedämmwirkung der Schutzschicht kann die derzeit unbefriedigende thermische Stabilitätstemperatur (1000 °C) von keramischen Fasern ohne Schäden für das Bauteil zu höheren Anwendungstemperaturen, beispielsweise 1300 °C für Keramikschindeln in der Brennkammer einer Gasturbine verschoben werden.

Die negativen Effekte unterschiedlicher thermischer Ausdehnung der verschiedenen Oxide werden durch die Gradierung verringert. Als Beispiel wird das System Mullit/Aluminiumoxid ($Al_2O_3 \cdot xSiO_2/Al_2O_3$) angegeben:

Thermische Ausdehnungskoeffizienten:

$$\text{Mullit } \alpha = 4\text{-}5 \ [*10^{-6} \ K^{-1}]$$

$$Al_2O_3 \ \alpha = 9 \ [*10^{-6} \ K^{-1}]$$

Erfindungsgemäß wird die Schutzschicht vorzugsweise mittels Flammspritzen oder Plasmaspritzen auf das Substrat aufgebracht. Aus der inhärenten porösen Gefügestruktur der Schutzschicht ergibt sich eine exzellente Thermoschockbeständigkeit der Schicht. Aufgrund der sehr geringen Wärmeleitfähigkeit des Schichtmaterials resultiert die gute Wärmedämmung der Schutzschicht.

Die zur Herstellung der Verbundkeramikmaterialien einzusetzenden Substrate sollen vorzugsweise Fasermaterial aus Faserbündeln, Vliesen, Gewirken und/oder Geweben enthalten. Besonders bevorzugt sind solche auf der Basis von MgO, CaO, $Al_2O_3$, $ZrO_2$, $Y_2O_3$ und/oder $SiO_2$-Systemen. Gleiches gilt auch für die Materialien der Matrix.

In einer besonderen Ausführungsform der vorliegenden Erfindung sind die Substrate dadurch gekennzeichnet, dass das oxidische Fasermaterial aus Mullit-Fasern besteht. Besonders bevorzugt in diesem Sinne ist es wenn auch die oxidische Matrix aus Mullit besteht.

Die Verbundkeramikmaterialien können beispielsweise als thermischer Schutz in einer Brennkammer einer Gasturbine eingesetzt werden und bestehen somit aus einem Substrat und einer thermochemischen Schutzschicht zur Heißgasseite, beispielsweise auf mullitischer Basis.

Die thermochemische Schutzschicht sollte an der dem Substrat zugewandten Fläche eine möglichst ähnliche chemische Zusammensetzung aufweisen, wie das Substrat selbst. Dementsprechend **besteht** die thermochemische Schutzschicht in der dem Substrat zugewandten Fläche aus Mullit.

Je nach Anwendungsbereich und Substratzusammensetzung sind erfindungsgemäße thermochemische Schutzschichten besonders bevorzugt mit einer Zusammensetzung, die auf der dem Substrat abgewandten 0-berfläche aus Yttrium-stabilisierten Zirkoniumoxid (YSZ), Cerstabilisiertem Zirkoniumoxid und/oder Yttrium-Aluminium-Granat (YAG) bestehen.

Die Art der Gradierung kann dabei auf verschiedenste Art und Weise eingestellt werden. Besonders bevorzugt im Sinne der vorliegenden Erfindung ist es, die Gradierung kontinuierlich oder diskontinuierlich einzustellen. Dies ist beispielsweise durch den Einsatz von zwei verschiedenen Spritzpistolen möglich. Darüber hinaus ist es ebenso möglich, während des Auftragens der thermochemischen Schutzschicht das Verhältnis der Ausgangsmaterialien in einer Spritzpistole in Bezug auf die gewünschte Zusammensetzung zu verändern.

Die Erfindung sieht vor, dass das Substrat und die dem Substrat zugewandte Fläche der thermochemischen Schutzschicht die gleiche chemische Zusammensetzung aufweisen. Die Haftung der Schutzschicht durch Verwendung des gleichen Materials wie im Substrat in der Schutzschicht an der Substratseite ist dann besonders hoch. Das Gesamtsystem bietet ausreichende Eigenschaften wie Thermoschockstabilität, Resistenz in reduzierender und oxidierender Atmosphäre, hohe thermische Belastbarkeit, gute Wasserdampfresistenz bei hohen Temperaturen, Drücken und Gasgeschwindigkeiten, die beispielsweise in Brennkammern von stationären und in stationären Gasturbinen (zum Beispiel Kraftwerksturbinen oder Flugzeugtriebwerke) herrschen.

Die negativen Eigenschaften chemischer Inkompatibilität der verschiedenen Oxidschichten werden durch die Gradierung vermindert. $Al_2O_3$ ist unter den angegebenen drastischen Brennkammerbedingungen chemisch weitgehend resistent gegen Wasserdampfkorrosion und verspricht eine ausreichende Langzeitstabilität.

Der entscheidende Vorteil gleicher Materialien des Substrats und der substratseitigen Schutzschichtfläche hier ist, dass im Hochtemperatureinsatz keine Fehlpassung aufgrund unterschiedlicher thermischer Ausdehnungkoeffizienten auftritt.

Bei dem Substrat wird vorzugsweise ein gebündelter Faserverbund auf der Basis kommerziell erhältlicher oxidischer Hochtemperaturfasern auf der Basis von Mullit, wie beispielsweise NEXTEL® 720 der Firma 3M eingesetzt. Ein entsprechendes Substrat wird beispielsweise mit einer flammgespritzten thermochemische Schutzschicht versehen.

Die Schicht, die mittels dieses Verfahrens aufgebracht wird, übernimmt den thermochemischen Schutz des darunterliegenden Substrats, dessen maximale Einsatztemperatur bei etwa 1000 °C im Langzeiteinsatz liegt. Dem Substrat fällt der mechanische Teil der Belastung zu, der sich aus Kräften und Momenten durch Vibrationen oder Vorspannungen durch den Einbau zusammensetzt.

Herausragend ist erfindungsgemäß das versagenstolerante Verhalten des Substrats, das lokale Schädigung toleriert, ohne als Gesamtverbund zu versagen.

Besonders geeignet ist die vorliegende Erfindung für Keramikschindeln in Brennkammern (stationäre Gasturbine, Fluggasturbine, Wärmetauscher, Brennerrohre, Reaktorauskleidungen) in hohen und kritischen Anwendungsbereichen.

Ausführungsbeispiel:

Herstellung des Substrats.

Zur Herstellung des oxidischen Substrats wurden unbeschichtete oxidische Faserbündel (beispielsweise Nextel®720) eines Faserdurchmessers von etwa 10 bis 15 µm mit einem wässrigen mullitischen Schlicker infiltriert, vorgetrocknet und in einer Wickelvorrichtung auf einen Kern aufgewickelt. In feuchtem Zustand ließen sich diese Wickelkörper auftrennen, formen und fügen, was die Herstellung sehr komplexer Komponenten ermöglichte. Anschließend wurde der Verbund in einem Luftofen bei Temperaturen oberhalb 1300°C wenigstens 15 min drucklos gesintert.

Im Vergleich zum Substratmaterial der DE 198 14 588 A1 zeigt dieses Material bessere mechanische Eigenschaften und lässt sich zu komplexen Komponenten verarbeiten, wie sie mit der Heißpresstechnik nicht realisierbar sind.

Beschichtung der Substrate:

Die oben beschriebenen Substrate wurden unter einer handelsüblichen Spritzapparatur arretiert und nach Einstellung der relevanten Parameter, wie Spritzabstand und Fördergasdruck, an der Flammspritzanlage zunächst mit einem kommerziell erhältlichen Mullitpulver beschichtet. Um die mullitische thermische Schutzschicht einer mullitischen Faserverbundkeramik auch chemisch resistent zu gestalten, wurde eine gradierte oxidische Schutzschicht aufgebracht, die an der Substratseite rein mullitisch war und an der Oberfläche reines Oxid (hier $Al_2O_3$) aufwies.

Die Korngrößenverteilung und Siebung des Pulvers waren dabei für den gewählten Flammspritzprozess abzustimmen. Im Verlauf des Flammspritzens wurde die Zusammensetzung kontinuierlich in Richtung von reinem $Al_2O_3$ hin variiert. Da durch Referenzversuche die Auftragsdicke bekannt war, ließ sich eine bestimmte Schichtdicke ohne große Probleme einstellen.

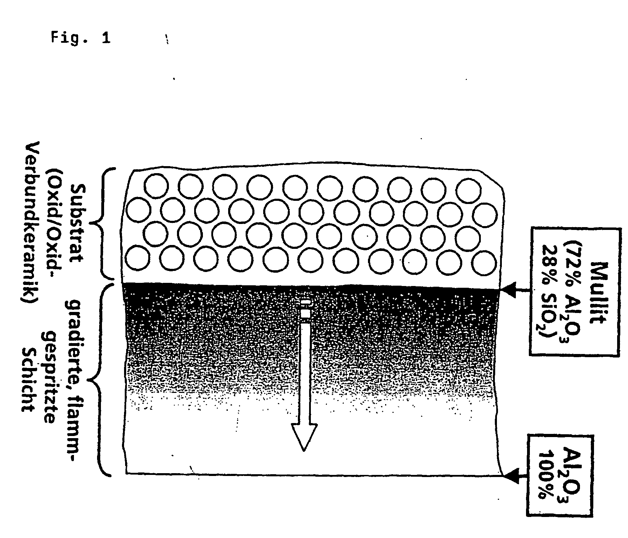

**Patentansprüche**

1. Verbundkeramikmaterial mit einem $SiO_2$-Phasen enthaltenden Substrat aus oxidischem Fasermaterial und oxidischer Matrix mit einer gradierten thermochemischen Schutzschicht, die an der dem Substrat abgewandten Oberfläche frei von Siliziumdioxid ist und an der dem Substrat zugewandten Fläche die gleiche chemische Zusammensetzung wie das Substrat aufweist **und aus Mullit besteht.**

2. Verbundkeramikmaterial nach Anspruch 1, **dadurch gekennzeichnet, dass** das oxidische Fasermaterial ausgewählt ist aus Faserbündeln, Vliesen, Gewirken, und/oder Geweben.

3. Verbundkeramikmaterial nach Anspruch 1 oder 2, **dadurch gekennzeichnet, dass** das oxidische Fasermaterial aus Mullit-Fasern besteht.

4. Verbundkeramikmaterial nach einem der Ansprüche 1 bis 3, **dadurch gekennzeichnet, dass** die oxidische Matrix aus Mullit besteht.

5. Verbundkeramikmaterial nach einem der Ansprüche 1 bis 4, **dadurch gekennzeichnet, dass** die thermochemische Schutzschicht an der dem Substrat abgewandten Oberfläche aus Yttrium stabilisiertem Zirkoniumoxid (YSZ), Cer stabilisiertem Zirkoniumoxid und/oder Yttrium-Aluminium-Granat (YAG) besteht.

6. Verbundkeramikmaterial nach einem der Ansprüche 1 bis 5, **dadurch gekennzeichnet, dass** die Gradierung der thermochemischen Schutzschicht kontinuierlich oder diskontinuierlich verläuft.

7. Verwendung von Verbundkeramikmaterial nach einem der Ansprüche 1 bis 6, zur Herstellung von Keramikschindeln von Brennkammern in stationären oder mobilen Gasturbinen.

8. Verfahren zur Herstellung von Verbundkeramikmaterial nach einem der Ansprüche 1 bis **6**, **dadurch gekennzeichnet, dass** man auf die thermisch beaufschlagte Fläche des Substrats die thermochemische Schutzschicht durch Flammspritzen und/oder Plasmaspritzen aufträgt.

9. Verfahren nach Anspruch **8, dadurch gekennzeichnet, dass** man das Mischungsverhältnis der Ausgangsmaterialien der thermochemischen Schutzschicht kontinuierlich oder diskontinuierlich verändert.

**Claims**

1. A composite ceramic material with a substrate containing $SiO_2$ phases and consisting of an oxidic fibrous material and an oxidic matrix, comprising a graduated thermochemical protective layer which is free from silicon dioxide at the surface facing away from the substrate and has the same chemical composition as the substrate at the surface facing towards the substrate and consists of mullite.

**2.** The composite ceramic material according to claim 1, **characterized in that** said oxidic fibrous material is selected from fiber bundles, non-woven, knitted and/or woven fabrics.

**3.** The composite ceramic material according to claim 1 or 2, **characterized in that** said oxidic fibrous material consists of mullite fibers.

**4.** The composite ceramic material according to any of claims 1 to 3, **characterized in that** said oxidic matrix consists of mullite.

**5.** The composite ceramic material according to any of claims 1 to 4, **characterized in that** said thermochemical protective layer consists of yttrium-stabilized zirconia (YSZ), cerium-stabilized zirconia and/or yttrium-aluminum garnet (YAG) at the surface facing away from the substrate.

**6.** The composite ceramic material according to any of claims 1 to 5, **characterized in that** said graduation of said thermochemical protective layer is continuous or discontinuous.

**7.** Use of a composite ceramic material according to any of claims 1 to 6 for preparing ceramic shingles of combustion chambers in stationary or mobile gas turbines.

**8.** A process for preparing a composite ceramic material according to any of claims 1 to 6, **characterized in that** the thermochemical protective layer is applied to the heated surface of the substrate by flame spraying and/or plasma spraying.

**9.** The process according to claim 8, **characterized in that** the mixing ratio of the starting materials in the thermochemical protective layer is changed continuously or discontinuously.

**Revendications**

**1.** Matériau céramique composite avec un substrat contenant des Phases $SiO_2$ et étant composé d'un matériau fibreux d'oxydes et une matrice d'oxydes, comprenant une couche protectrice thermochimique graduée étant exempte de dioxyde de silicium à la surface dirigée vers le coté opposé du substrat et ayant la même composition chimique que le substrat à la surface dirigée vers le substrat et étant composée de mullite.

**2.** Matériau céramique composite selon la revendication 1, **caractérisé en ce que** ledit matériau fibreux d'oxydes est choisi parmi les faisceaux de fibres, les non-tissés, les tricots et/ou les tissus.

**3.** Matériau céramique composite selon la revendication 1 ou 2, **caractérisé en ce que** ledit matériau fibreux d'oxydes est composé de fibres de mullite.

**4.** Matériau céramique composite selon l'une des revendications 1 à 3, **caractérisé en ce que** ladite matrice d'oxydes est composée de mullite.

**5.** Matériau céramique composite selon l'une des revendications 1 à 4, **caractérisé en ce que** ladite couche protectrice thermochimique est composée de zircone stabilisée à l'yttrium (YSZ), zircone stabilisée au cérium et/ou de grenat d'yttrium et d'aluminium (YAG) à la surface dirigée vers le coté opposé du substrat.

**6.** Matériau céramique composite selon l'une des revendications 1 à 5, **caractérisé en ce que** la graduation de ladite couche protectrice thermochimique est continu ou discontinu.

**7.** Utilisation d'un matériau céramique composite selon l'une des revendications 1 à 6 pour la préparation de bardeaux céramiques de chambres à combustion dans des turbines à gaz stationnaires ou mobiles.

**8.** Procédé pour l'obtention d'un matériau céramique composite selon l'une des revendications 1 à 6, **caractérisé en ce que** l'on applique la couche protectrice thermochimique sur la surface chauffée du substrat au moyen de projection thermique et/ou de projection plasma.

**9.** Procédé selon la revendication 8, **caractérisé en ce que** l'on change le rapport de mélange des matériaux de départ de ladite couche protectrice thermochimique en continu ou en discontinu.

Fig. 1

Substrat
(Oxid/Oxid-
Verbundkeramik)

gradierte, flammgespritzte
Schicht

Mullit
(72% Al$_2$O$_3$
28% SiO$_2$)

Al$_2$O$_3$
100%